Europäisches Patentamt

European Patent Office

Office européen des brevets

(19)

(11) Publication number: 0 310 444
A2

# (12) EUROPEAN PATENT APPLICATION

(21) Application number: 88309149.8

(51) Int. Cl.⁴: G 06 F 12/10

(22) Date of filing: 30.09.88

(30) Priority: 02.10.87 US 104352

(43) Date of publication of application:
05.04.89 Bulletin 89/14

(84) Designated Contracting States: DE FR GB IT

(71) Applicant: COMPUTER CONSOLES INCORPORATED (a Delaware corporation)
9801 Muirlands Boulevard
Irvine California 92718-2521 (US)

(72) Inventor: Sims, Roger Scott
22945 Springwater Street
E1 Toro California 92630 (US)

Benkual, Jack
25906 Greenbank
E1 Toro California 92630 (US)

Slingwine, John David
26381 Via Conchita
Mission Viejo California 92691 (US)

(74) Representative: Meddle, Alan Leonard et al
FORRESTER & BOEHMERT Widenmayerstrasse 4/I
D-8000 München 22 (DE)

(54) Multi-mode control of virtually-addressed unified cache.

(57) A virtually-addressed cache comprises a cache control portion (111) having a multiple modes of operation including a predetermined mode entered upon a translation cache miss. A translation cache portion (205) provides for storing translation data that the cache control portion, during each of the multiple modes, sends to the address translator on a translation cache hit. A special cache portion (201) provides for storing instructions and data that the control portion selectively sends to the instruction register and the general purpose registers so that, during the mode entered upon a translation cache miss, the special cache portion is used in support of execution of a programmed translation cache replacement operation, and so that, upon exit from that predetermined mode upon completion of the replacement operation, the special cache portion is isolated from the operation of the system.

FIG. 2.

EP 0 310 444 A2

**Description**

## MULTI-MODE CONTROL OF VIRTUALLY-ADDRESSED UNIFIED CACHE

Background of the Invention

In general, this invention relates to data processing systems in which virtual-to-physical address translations are performed; more particularly, it relates to a cache memory in which translation data are stored for use in performing the translations.

Virtual addressing principles have been applied in organizing many data processing systems as part of various strategies including strategies to manage multi-level memory.

As to multi-level memory, one level is a main memory and another level is a bulk store such as a disk that, compared to the main memory, provides substantially more storage capacity but consumes substantially more time before it completes a response to an access request for writing and reading operations. By applying virtual addressing principles to multi-level memory management in a data processing system, an instruction processor in the system can execute programs that contain references to a memory space that far exceeds the actual memory space in the particular data processing system.

In fetching the instructions of such programs and in executing them, an instruction processor sends to the main memory physical addresses that the instruction processor produces on the basis of the result of a table look up operation that yields translation data. Typically, massive quantities of such translation data need to be stored, and such data need to be organized in a way to facilitate selective retrieval. In this regard, the translation data are organized in accord with a referencing technique called paging. In accord with a paging technique, data including the translation data as well as program data are organized into fixed-size blocks called pages. From one system to another, the number of bytes per page varies depending on various factors, and the number is sometimes chosen to coincide with the number of bytes transferred as a unit between disk and main memory. A representative example of a page size is 4096 bytes.

A further background matter relates to the need for speed in getting such translation data for its intended use. In this regard, an instruction processor can generally operate at a basic clock rate to execute each of many instructions in its instruction repertory within a relatively few basic clock cycles, even as few as one basic clock cycle. However, it generally requires many more basic clock cycles to complete a request for a main memory access for writing or reading. The combined effect of various factors such as memory latency and delays associated with handshaking protocols is such that processor-memory data-transfer cycles typically consume in the neighborhood of about 12 basic clock cycles of the instruction processor.

Because this ratio is high, a substantial penalty is incurred, in some circumstances, incident to a memory access. Such circumstances are those in which, incident to one of a sequence of instructions, such a memory access must be completed before the instruction can be completed or before the next instruction can start executing. Such a circumstance arises if, to translate a virtual address to a physical address, an instruction processor has to access memory to get translation data and immediately thereafter then has to access memory again with the physical address derived from the translation data.

One of the significant developments in the field of computer architecture is directed to improving overall system throughput by providing a cache memory for the instruction processor. A cache memory is a particular kind of a buffer memory; in comparison with main memory, it has relatively small capacity and has attendant relatively high speed. For various reasons including the way in which programs are organized to define loops and the like, a statistically high percentage of instruction fetches are directed to recently accessed main memory locations. Similarly, a statistically high percentage of executions of load and store instructions reference a recently referenced memory location. This point is sometimes referred to as "locality of reference."

A cache memory provides for taking advantage of such locality of reference. The basic idea is to arrange to load a fast access, relatively small, buffer memory so that most frequently an instruction or data item can be found in it to obviate accessing main memory.

Cache control structure is required to implement a cache memory to provide for certain sequential operations that entail looking up tag data stored in the cache and then using such tag data in an associative addressing operation. To support such associative addressing, each location in the cache memory has memory cells for storing tag data, and, typically, additional control data. Such tag and control data are stored in concatenated fashion in each cache location with data constituting the stored contents of the location. The cache control structure responds to a memory address to select one or more loca tions in the cache memory and retrieve such stored tags from each selected location. After each such tag is retrieved, comparator circuitry incorporated in the cache control structure compares the retrieved tag against a portion of the memory address. If a retrieved tag has the same value as that portion, there is a cache hit, meaning that the desired information resides in the cache memory, whereby the penalty of a main memory access need not be incurred. Otherwise, there is a cache miss.

Upon a cache miss, there is a need to replace some data in the cache memory. In such circumstances, the cache control structure cooperates with sequencing structure in the instruction processor to initiate a main memory read to get the replacement data. When the replacement data arrive, the cache control structure provides for storing the replacement data in the cache memory to replace less recently accessed data. This operation can generally be carried out during the time the processor makes its initial use of the supplied replacement data.

A cache memory can be used for storing translation data, in which case the cache is called a translation cache. The cache control structure of a translation cache responds to a virtual address to perform the cache look up and comparison operation, and, upon a cache hit on a cache location, it transfers translation data from that cache location to an address translator in the instruction processor. The translator also has transferred to it the virtual address that caused the cache hit. The translator processes that virtual address and that translation data in an operation that typically involves concatenating a selected field of the virtual address and a selected field of the translation data. The concatenated result is the physical address the instruction processor uses to access main memory.

In accord with known techniques, a substantial amount of hardware is required to implement a translation cache. A significant portion of this required structure resides in the cache control structure that supports associative addressing and includes separate write amplifiers and read amplifiers for transferring data bits and tags bits and other control bits in parallel into and out of selected cache locations. It further includes the comparator circuitry used to compare such stored tags against a selected field of a virtual address. Further in accord with known techniques, where a translation cache has been used, it has been incorporated as an element of a complex translation mechanism that includes a substantial amount of hardware for handling a variety of tasks such as preserving a record of the execution environment of the instruction processor at the time of a cache translation miss and sequencing operations to get replacement data for the translation cache.

A substantial need exists for an improved approach for reducing the complexities that have attended the implementation of a translation cache and its incorporation into such complex translation mechanisms.

## Summary of the Invention

This invention is based on a new and advantageous approach to the organization and operation of a virtually addressed cache memory. In accord with this invention, the cache memory is a unified cache and provides for multiple modes of operation.

The invention can be regarded as residing in a combination of elements incorporated in such a cache and alternatively can be regarded as residing in a method.

As to defining the invention in terms of such a combination of elements, it resides in a virtually-addressed unified cache in a data processing system. As a conventional element of the data processing system, it has an addressable memory for storing instructions and data including translation data for use in virtual-to-physical address translations. The system further has a programmable data processor that preferably is a single-chip instruction processor as further described below. In any case, the instruction processor includes an instruction register for storing instructions fetched from memory, general purpose registers for storing data read from memory, and an address translator for performing the virtual-to-physical address translations.

The virtually-addressed cache comprises a cache control portion; a translation cache portion; and a special cache portion. The cache control portion has multiple modes of operation including a predetermined mode entered upon a translation cache miss. The translation cache portion provides for storing translation data that the cache control portion, during each of the multiple modes, sends to the address translator on a translation cache hit. The special cache portion provides for storing instructions and data that the control portion selectively sends to the instruction register and the general purpose registers so that, during the mode entered upon a translation cache miss, the special cache portion is used in support of execution of a programmed translation cache replacement operation, and so that, upon exit from that predetermined mode upon completion of the replacement operation, the special cache portion is isolated from the operation of the system.

An arrangement that provides support for system software to control sequencing of translation cache operation is highly advantageous in numerous respects. Firstly, the amount of hardware can be significantly reduced from the amount that has been needed in accord with prior art approaches. Secondly, there are significant advantages relating to flexibility that are rendered possible as a result of providing support for system software, rather than using dedicated hardware that is difficult if at all practical to change.

As to defining the invention in terms of a method, it resides in a method of loading replacement translation data into a translation cache after a translation cache miss so that the translation data so loaded will be cached for use in virtual-to-physical address translations with respect to a predetermined set of virtual addresses. In the specific example of the system described in detail below, this set of addresses involves 7/8ths of the total virtually addressable space. The method comprises establishing a predetermined mode of operation applicable to translation cache load operations. It further comprises calling a system routine having a predetermined starting address that is outside of the predetermined set. It further comprises selecting a special cache for use during the predetermined mode to support the system routine. It further comprises exiting the predetermined mode and the system routine to return to a mode in which the special cache is inaccessible.

## Brief Description of the Drawings

FIG. 1 is a sketch relating to the layout of a single-chip instruction processor that includes a virtually-addressed unified cache in accord with this invention, and shows the relative space occupied by various functional groups of devices in the chip;

FIG. 2 is a block diagram relating to overall features of a virtually-addressed unified cache that operates in multiple modes in accord with this invention;

FIG. 3 shows combinatorial logic circuits for producing cache-portion selection signals;

FIG. 4 shows a state machine organization for use in producing a signal that is asserted during a predetermined mode, referred to herein at T-mode, including each time re-entry is made into T-mode;

FIG. 5 shows circuits for use in support of hardware functions carried out by the unified cache; and

FIG. 6 shows registers and associated signal paths for propagating fields of virtual addresses, including a special-cache-portion selection signal that is applied in support of system-software control over a translation cache replacement operation.

Detailed Description

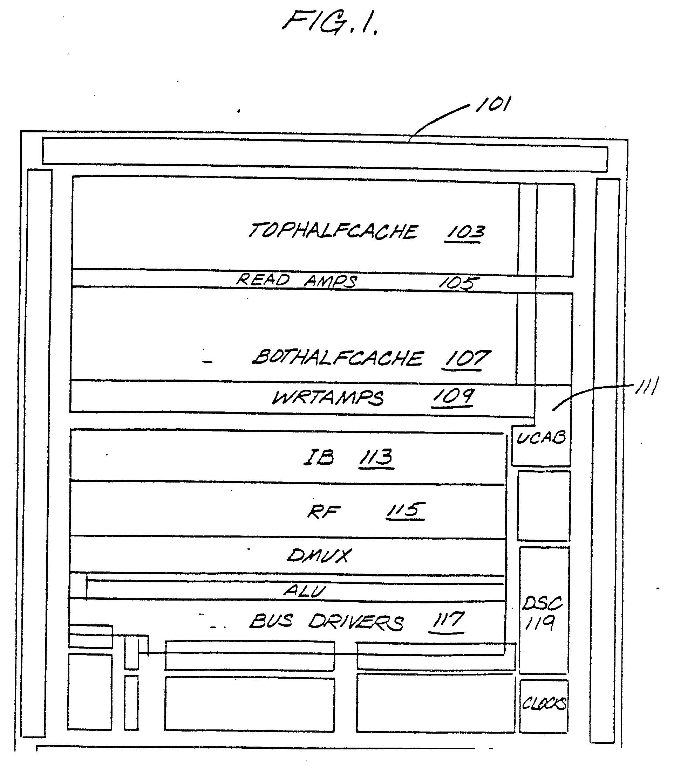

With reference to FIG. 1, there will now be set out some introductory matters relating to the overall organization of a single-chip instruction processor (IP 101) which includes the preferred embodiment of a unified cache according to this invention. IP 101 is defined on a 450 mil. square die, and incorporates in excess of 500,000 devices. This large number of devices in a single chip is within the state of the art in integrated circuit fabrication technology because of the availability of 1.2 micron CMOS (Complementary Metal Oxide Semiconductor) technology. With such a large number of devices on chip, IP 101 can carry out very complex operations in very few basic clock cycles; indeed, each of many powerful instructions can be carried out by IP 101 within the time defined by a single basic clock cycle.

As to the basic clock rate for IP 101, it is designed for a basic clock rate of 55.5 MHz. At this basic clock rate, single-cycle instruction executions occur in a period as short as 18 nanoseconds. This high basic clock rate is within the state of the art using CMOS (Complementary Metal Oxide Semiconductor) technology.

A relatively large portion of the area of IP 101 is used by a virtually-addressed unified cache that is designated in FIG. 1 as TOPHALFCACHE 103, READ AMPS 105, BOTHALFCACHE 107, WRTAMPS 109, and UCAM 111. (UCAB is an acronym for Unified Cache Address Block.) In accord with a preferred feature of the this invention, the unified has three cache portions: an Instruction Data Cache (IDC), a Translation Cache (TC), and a Special Cache (SC). The IDC stores instructions or data or both, the translation cache stores translation data comprising page table entries (PTEs), and the special cache stores instructions or data or both.

Immediately below the unified cache, there is an area designated IB 113. This is for a separate cache for instruction buffering. It is organized and implemented differently from the unified cache. It is organized as a 4-block, 1-set associative cache for storing eight instructions in each of its four locations. It is implemented in static RAM cells for maximum speed. In contrast, the unified cache is implemented in dynamic RAM cells for maximizing cell density. Other portions of the area of IP 101 are used, for among other things, a data loop portion of IP 101 that includes a 32-register deep register file RF 115 of general purpose registers, and further includes an arithmetic and logic unit ALU 117. The principal state machine for producing the timing and control signals to sequence the internal operations of IP 101 is designated DSC 119.

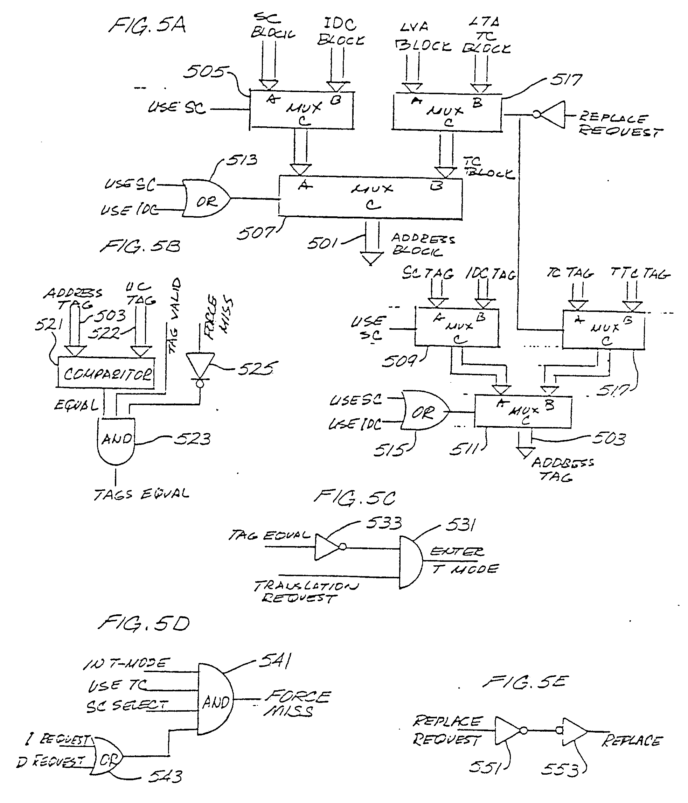

IP 101 has four modes of operation: user mode, kernel mode, micro mode, and translation mode. The current mode is determined by certain bits of a Processor Status Longword PSL register. These bits are grouped for reference as the Translation Mode (T-mode) bits (TM0, TM1, TM2), Micro Mode (MM) bit, and User Mode (UM) bit. (See FIG. 4 for a block diagram used to explain the operation of keeping a record of the T-mode bits). IP 101 is in T-mode when any of the TM0, TM1, or TM2 bits are set; in micro mode when not in T-mode and the MM bit is set; in kernel mode when not in T-mode or micro mode and the UM bit is cleared; and in user mode when not in T-mode or micro mode and the UM bit is set.

Translation mode is a privileged state. It masks all events (interrupts, faults, traps, exceptions). T-mode modifies the behavior of the processor so that system software may load the translation cache (discussed later). As such, T-mode's purpose is very specialized. T-mode is entered as the result of a translation cache miss.

Micro mode is a privileged state. It masks all events other than system fault (system fault indicates an unrecoverable hardware error). This allows atomic sequences of instructions to be defined, enjoying many of the same properties as a micro routine in a microcoded machine. Micro mode is normally entered as a result of execution of a predetermined instruction in the instruction repertory (an MCALL instruction), or event.

User mode and kernel mode are similar to the nonprivileged and privileged modes of most conventional processors. User mode is used to execute application code, kernel mode to execute the majority of the kernel.

IP 101 has a translator for concatenating a selected field of a virtual address with a selected field of a PTE. This implements a very simple technique for address translation and access control. A virtual address has 32 bits that can be compactly denoted as 8 hexadecimal digits. Unless otherwise noted, address values given below are expressed in hexadecimal. With 8 hexadecimal digits, a 4-gigabyte virtual address space can be defined extending from 00000000 to FFFFFFFF.

For most of its values (7/8ths of them), a virtual address is mapped by using translation data derived from the translation cache. These virtual addresses are those in the range 0000000 to BFFFFFF or the range E000000 to FFFFFFF inclusive (i.e., bit 31, 30, and 29 not equal to 110). For each of the ramaining values (1/8th of the total), the virtual address is mapped using an Unmapped Translation Entry (UTE) that is stored in a special purpose register in IP 101.

In a virtual address for the translation-data mapped region, its 12 least significant bits VA[11:0] define an offset relative to the base of a page. Its remaining bits are used with regard to addressing the translation cache; they are VA[31:19], for the tag data; VA[18:16], for addressing the translation block; and VA[15:12], for the entry number of the PTE within the block. The address translator in IP 101 uses a portion of a PTE and a portion of such a virtual address to map the virtual address to a physical address. The format for a PTE is as follows. Its least significant bit PTE[0] is a valid bit, indicating whether a page is valid or not. Its 4 next most significant bits PTE[4:1] are a kernel read (kr) bit, a kernel write (kw) bit, a user read (ur) bit, and a user write (uw) bit; these indicate kernel/user mode permissions. Its 20 most significant bits PTE[31:21] define a Page Frame Number.

A virtual address in that range is mapped by fetching the appropriate Page Table Entry (PTE) from the Translation Cache (TC misses are discussed below). The bits of the PTE that define the Page Frame Number PTE[31:12] are concatenated with the bits of the virtual address that define the offset VA[11:0] to form the physical address.

A virtual address in the range C000000 to DFFFFFFF inclusive is mapped by a special register called the Unmapped Translation Entry (UTE). Bits 27 to 31 of the UTE are concatenated with bits 0 to 26 of the virtual address to form the physical address.

Access checking is done using the protection field of the PTE or UTE that maps the address. "KR" of the protection field allows access on privileged reads, "KW" on privileged writes, "UR" on privileged reads, and "UW" on nonprivileged writes.

The kernel builds a conventional eight-partition virtual address space on top of this mechanism. The system page table is allocated within the unmapped region and is used to map the P7 partition. Page tables for the other partitions are held within the P7 partition. A memory array of seven base and limit registers called the Translation Register File (TRF) describes the start and limit of the system and user page tables.

With resect to further particulars as to the cache structures in IP 101, the Instruction Buffer (IB) is used to cache instructions. In the unified cache, the Instruction Data Cache (IDC) is used to cache instructions, data and register windows; the Translation Cache (TC) is used to cache Page Table Entries (PTEs) needed in address translations; and the Special Cache is used to cache instructions and data needed to manage TC loads. For both the IB cache and the unified cache, cache block size (or location width) is 64 bytes/8 instructions/16 PTEs. The IB has 1x4 cache blocks; the IDC has 64x2 cache blocks; the TC and SC each have 8x2 blocks. During execution of a store instruction, data can be stored into a location in the IDC. This is not the case for the IB, TC, and SC.

The IDC, TC, and SC are: two-way serially associative -- on a cache lookup, tags are compared "one after the other" rather than "at the same time"; virtually tagged-- cache lookup is done against a virtual address rather than a physical address; write back -- data written into the cache causes no memory write until the corresponding block is replaced or purged; and nonsnooping -- cache hardware does not attempt to maintain consistency with memory (during I/O), external caches (in multiple processor systems) or between internal caches (during context switches). The IB cache is four-way fully associative, virtually tagged, read only, and nonsnooping.

An important point to note about the unified cache is that, as a result of teachings of this invention with respect to incorporating the translation cache into the unified cache, there is no need to provide a large amount of special hardware for handling cache replacement operations to load cache blocks into the translation cache. To the contrary, because of the way in which the behavior of the unified cache is altered during T-mode, it has been made possible to handle this function by executing a routine in the system software (kernel).

Further with respect to T-mode behavior to support system software in loading the translation cache, the event that causes entry into T-mode is a translation cache miss. When this occurs, IP 101 faults the current instruction, enters T-mode, and calls a routine which utilizes the T-mode-dependent features of the IP to load the proper page table entries.

When in T-mode, IP behavior is altered as follows: if bit 28 of a virtual address is on, the virtual address accesses the SC instead of the IDC; references to the IDC (bit 28 turned off) always miss; cache loads to the IDC are redirected into the TC with the tag and block portion of the entry coming from a Translation Virtual Address register (TVAD); the call and return mechanism uses a Translation Window Pointer (TWP) rather than a Window Pointer Register WP. On a TC miss, IP 101 performs the following: the virtual address causing the miss is latched into TVAD; the TM bits are turned on (causing an entry into T-mode); and a call (using the TWP) is made to D004000. The kernel initializes the TWP to D002000; all T-mode code and data (including the Translation Register File - TRF) are within virtual addresses: D002000 to D002FFF and D004000 to D004FFF. Thus, the SC is used to cache all T-mode code, data, and register windows.

The T-mode routine executes the following sequence to load a block of page table entries into the TC: save all registers needed by the T-mode routine; extract the virtual page number and segment number from the virtual address; fetch the base and limit "registers" for the region containing the virtual address; perform a limit check against the virtual page number; calculate the address of and load the PTE mapping the virtual page number; restore registers saved above; exit from T-mode by executing an MRET instruction.

Loading the PTE mapping the virtual address causes the block of 16 PTEs containing the PTE to be loaded into the translation cache. This requires that PTEs be stored in the first 256 megabytes of a region's space (i.e., bit 28 is off). Loading an address with bit 28 off causes a miss on the IDC. After IP 101 hardware fetches the block which caused the miss, it will replace it into the TC; the tag and block used in the replace are gotten from the TVAD. This loads the TC with the block containing the PTE mapping the virtual address which originally caused the miss.

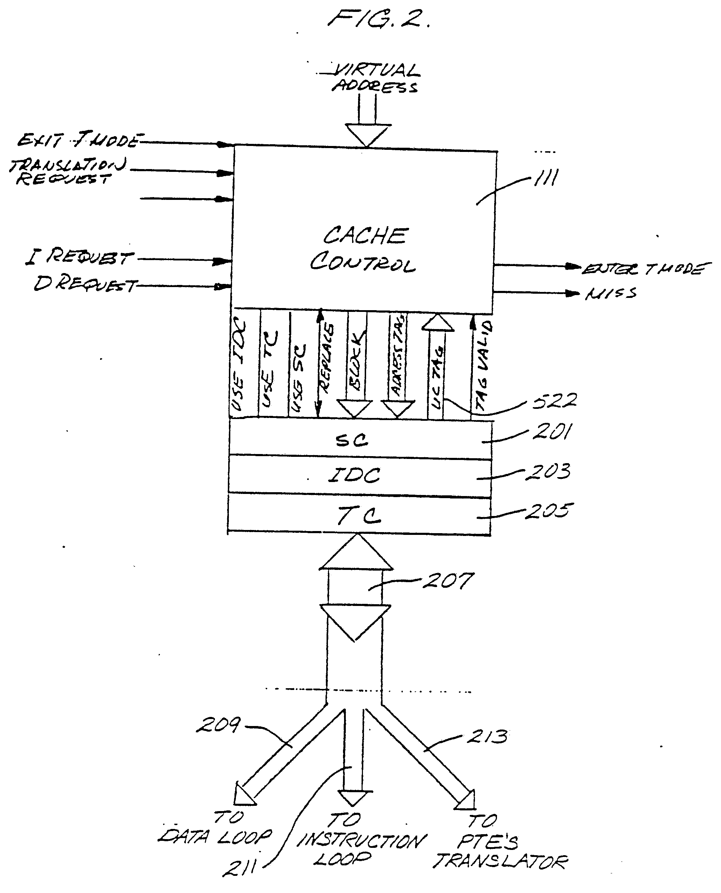

With respect to further particulars concerning the construction of the unified cache, reference is now made to FIG.2 which shows the unified cache as including four portions: cache control portion 111; SC 201; IDC portion 203; and translation cache portion 205. Cache control portion 201 is connected to a bus to receive a virtual address. A unified cache bus 207 is connected to the unified cache. It comprises 512 conductors to provide for bi-directional transfers with respect to the unified cache. Data being transferred between the unified cache and the data loop of IP 101 propagate via a data-transfer path 209. Instructions being transferred from the IDC portion of the unified cache to the instruction buffer cache (IB 113 - FIG. 1) propagate via path 211. Page Table Entries (PTEs) propagate from TC 205 to the translator via path 213.

Each time IP 101 needs to fetch an instruction (i. e., on an IB cache miss), and each time an instruction referenceS memory for an operand not in the general purpose registers of RF 115, cache control 111 must perform at least one look up and associative comparison operation to determine whether there is a cache hit or a cache miss with respect to a selected portion of the cache. Various signals involved in this matter are shown in FIG. 2, and are further described below in the drawings that are directed to such detailed matters.

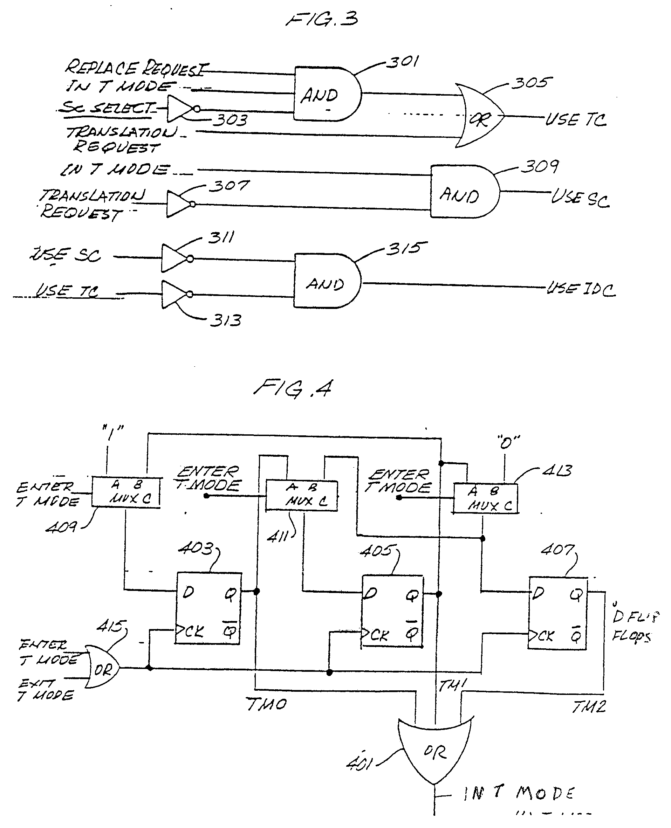

With reference to FIG. 3, there will now be described various logical gating circuits that implement the logical functions involved in producing certain cache-portion selection signals. These are Use TC; Use SC; and Use IDC. As to the Use TC signal, the gates involved are an AND gate 301, an inverter 303, and an OR gate 305. A Translation Request signal is applied to OR gate 305. Accordingly, whenever a translation request is made, the Use TC signal is asserted. A translation request is made each time there is a miss in the IDC portion in the course of executing a program such as a user program that references a memory location for an instruction or data not found in IDC 203, whereupon the need arises to look up a PTE to translate the reference from a virtual address to a physical address. Such a translation request can be made also in T-mode, as when the system software (kernel) similarly makes such a reference to a location for an instruction or data not found in SC portion 201. Further with respect to T-mode, there is a signal "In T-mode" that is produced by an OR gate 401 (FIG. 4); this signal is applied to AND gate 301. When, in combination, it is true, and a replace request is made, and the SC Select signal is false, then AND gate 301 forces OR gate 305 to assert the Use TC signal. The SC Select signal is directly controlled by the system software used to control IP 101 during T-mode to cause needed PTEs to be loaded into TC 205.

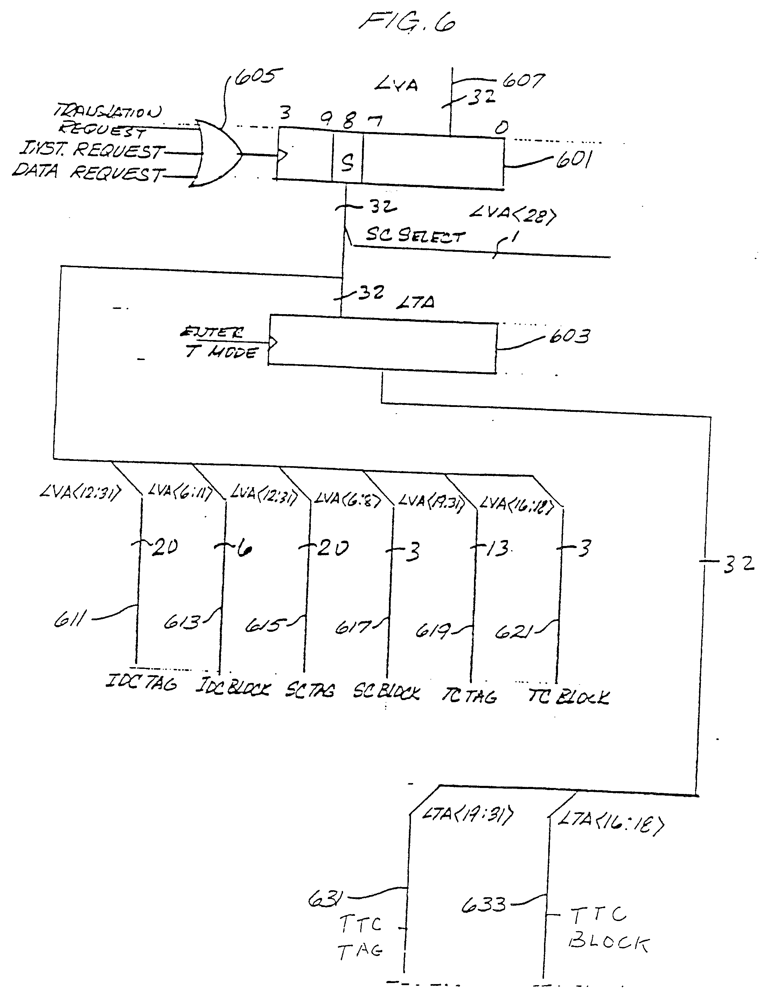

As shown in FIG. 6, the SC Select signal is a copy of bit 28, of a virtual address (i.e., LVA [28]). The selection of the bit position 28 for this SC selection signal is, of course, arbitrary. It is significant, however, that a technique is provided with regard to coding a virtual address to select one portion of a cache for one value and another portion of a cache for another value.

As to producing the cache-portion selection signal to select SC portion 201 of the unified cache, this involves an inverter 307 and an AND gate 309. As indicated by logic signals presented to these gates, the Use SC signal is true if, in combination, the IN T-mode signal is true and the translation request signal is false.

As to producing the cache-portion selection signal to select IDC portion 203 of the unified cache; this involves inverters 311, 313, and AND gate 315. As indicated by the logic signals presented to these gates, the use IDC signal is true if both the Use TC and Use SC signals are false.

With reference to FIG. 4, there will now be described a state machine for the function of the PSL register as to registering the T-mode bits. As indicated above, an OR gate 401 produces the IN T-mode signal. This signal is asserted as soon as T-mode is entered upon a translation cache miss. T-mode may be recursively entered, i.e., a translation cache miss can occur during T-mode. The IN T-mode signal is true irrespective of the level of nesting of invocations of the system software used in T-mode. In the presently preferred embodiment, the level of nesting can extend three levels deep. In a broad sense, the number of such levels is arbitrary; the number provided in any case depends upon particulars as to the organization of the paging data. In the case of the system which includes the preferred embodiment, there are three flip flops 403, 405 and 407 for registering three T-mode bits, TM0, TM1, and TM2, respectively, and corresponding to the maximum depth of nested invocations of the system software for T-mode in this system.

The state machine further includes multiplexers 409, 411, and 413, and an OR gate 415, which are arranged with flip flops 403, 405, and 407, so that the state machine operates somewhat like a bi-directional shift register.

More particularly, each of these flip flops is a D-type flip flop and each is triggered by a signal produced by an OR gate 415. This signal is asserted each time T-mode is entered and each time T-mode is exited. A shift operation occurs each such time; the shift is in one direction for response to the Enter T-mode signal and in the opposite direction in response to the Exit T-mode signal. In this regard, each of these three flip flops is in its reset state, when the machine is in a mode other than T-mode.

The Enter T-mode signal controls the selection operation of each of the multiplexers 409, 411, and 413. When the T-mode bits are all false (TM0, TM1, and TM2 equal 000), and the Enter T-mode signal is asserted, this causes the following. Each multiplexer selects its A side input as the one to propagate to its C output. The A side input of multiplexer 409 is always held true. Thus, on assertion of the Enter T-mode signal, under these circumstances, a "1" is shifted into flip flop 403, a "0" is shifted into flip flop 405, and a "0" is shifted into flip flop 407, the latter two shifts having no effect because each of these flip flops had already been in its reset state. If the Exit T-mode signal were to be asserted next, this would cause the flip flop 403 to reset because of the feedback connection from the Q output of flip flop 405 through the B input of multiplexer 409 to the D input of flip flop 403. Thus, if an entry is made into T-mode and then immediately thereafter T-mode is exited, the state machine operates such that flip flop 403 is set and then reset. If, on the other hand, the Enter T-mode signal is asserted consecutively because of a re-entry into T-mode, under these circumstances, multiplexer 411 causes flip flop 405 to be set upon such re-entry. Thus, the T-mode bits in such a circumstance would start at 000, then become 100 on the first entry into T-mode, and then become 110 on the second entry into T-mode. Similarly, if T-mode is reentered for a third nested time, the T-mode bits will become 111 as a result of the connection of multiplexer 413 to flip flop 407. If the nesting so extends three levels deep, an ensuing sequence of three assertions of the Exit T-mode signal return the T-mode bits to 000.

With reference to FIG. 5, there will now be described various other logic and signal gating circuit arrangements for the unified cache. In FIG. 5A, a group of circuits perform functions relating to propagating an address block signal and an address tag signal, and further relating to the selection of the signals to propagate. That is, when SC portion 201 is selected, the SC block and SC tag signals are propagated by bus 501 and bus 503, respectively. The propagation path involved here is through a multiplexer 505 and a multiplexer 507 for the address block signal, and through a multiplexer 509 and a multiplexer 511, for the address tag signal. An OR gate 513 provides the selection signal for multiplexer 507 and a multiplexer 515 provides the selection signal for multiplexer 511. When IDC portion 203 is selected, bus 501 propagates the IDC address block and bus 503 propagates the IDC tag signal.

As to propagating block address and address tag signals to TC portion 205, there are one of two possible sources for these signals. One source is LVA register 601 (FIG. 6); the other source is LTA register 603 (FIG. 6). When there is no replace request and access is being made to TC portion 205 for the purpose of looking up a PTE, multiplexer 517 propagates the LVA block from LVA register 601 to multiplexer 507, which in turn, propagates it to bus 501. At the same time, a multiplexer 517 propagates the TC tag portion stored in LVA register 601 to multiplexer 511, which in turn, propagates this signal to bus 503. On the other hand, when the Replace Request signal is true, the TC block addressing portion of LTA register 603 propagates through multiplexers 517 and 507 to bus 501, and the TTC tag portion of LTA register 603 propagates through multiplexers 517 and 511, to bus 503.

FIG. 5B shows a comparator 521, an AND gate 523, and an inverter 523 that are arranged to produce a Tags Equal signal. Comparator 521 produces an Equal signal when the signals it compares are equal, and AND gate 523 asserts the Tags Equal signal if that Equal Signal is true and the tag is valid and the Force Miss signal is false.

FIG. 5C shows an AND gate 531 and an inverter 533 that are arranged to produce the Enter T-mode signal. This signal is produced if the Tags Equal signal is false and the Translation Request signal is true.

FIG. 5D shows an AND gate 541 and an OR gate 543 that are arranged to produce the Force Miss signal. AND gate 541 asserts the Force Miss signal when, in combination, the IN T-mode signal is true, the use TC signal is true, the SC select signal is true, and either an Instruction Request or a Data Request signal is true. FIG. 5E shows inverters 551 and 553 that are arranged in tandem to produce the Replace signal in response to the Replace Request signal.

With reference to FIG. 6, LVA register 601 is 32 bits wide and the LTA register 603 is likewise 32 bits wide. Loading of LVA register 601 is controlled by an OR gate 605. Each time the Translation Request signal is asserted, or the Instruction Request signal is asserted, or the Data Request signal is asserted, OR gate 605 causes LVA register 601 to copy the address carried by bus 607. As to loading of LTA register 603, this is controlled by the Enter T-mode signal. Each time the Enter T-mode signal is asserted, LTA register is loaded with a copy of the current contents of LVA register 601. FIG. 6 also shows how the various bits stored in LVA register 601 and LTA register 603 are distributed by various buses that fan out from their respective outputs. The IDC tag signal is carried by a 20-bit wide path 611, the IDC block signal is carried by a 6-bit wide path 613, the SC tag signal is carried by a 20-bit wide path 615, the SC block signal is carried by a 3-bit wide path 617, the TC tag signal is carried by a 13-bit wide path 619, and the TC block signal is carried by a 3-bit wide path 621. With respect to distribution of the contents of LTA register 603, a path 631 is 13 bits wide for carrying the TTC tag signal and a path 633 is 3 bits wide for carrying the TTC block signal.

The features disclosed in the foregoing description, in the following claims and/or in the accompanying drawings may, both separately and in any combination thereof, be material for realising the invention in diverse forms thereof.

## Claims

1. In a data processing system having an addressable memory for storing instructions and data including translation data for use in virtual-to-physical address translations, and having a programmable data processor including an instruction register for storing instructions fetched from memory, general purpose registers for storing data read from memory, and an address translator for performing the virtual-to-physical address translations, a virtually-addressed unified cache characterised by: a cache control portion (111) having multiple modes of operation including a predetermined mode entered upon a translation cache miss; a translation cache portion (205) for storing translation data that the cache control portion, during each of the multiple modes, sends to the address translator on a translation cache hit; and a special cache portion (201) for storing instructions and data that the control portion selectively sends to the instruction register and the general purpose registers so that, during the mode entered upon a translation cache miss, the special cache portion is used in support of execution of a programmed translation cache replacement operation, and so that, upon exit from that predetermined mode upon completion of the replacement operation, the special cache portion is isolated from the operation of the system.

2. A method of loading replacement translation data into a translation cache after a translation cache miss so that the translation data so loaded will be cached for use in virtual-to-physical address translations with respect to a predetermined set of virtual addresses, the method comprising: establishing a predetermined mode of operation applicable to translation cache load operations; calling a system routine having a predetermined starting address that is outside of the predetermined set; selecting a special cache for use during the predetermined mode to support the system routine; and exiting the predetermined mode and the system routine to return to a mode in which the special cache is inaccessible.

# FIG.1.

101

TOPHALFCACHE    103

READ AMPS        105

BOTHALFCACHE    107

WRTAMPS        109

111

UCAB

IB   113

RF   115

DMUX

ALU

BUS DRIVERS    117

DSC
119

CLOCKS

# FIG. 2.

VIRTUAL ADDRESS

EXIT T MODE

TRANSLATION REQUEST

I REQUEST

D REQUEST

CACHE CONTROL

111

ENTER T MODE

MISS

USE IDC | USE TC | USG SC | REPLACE | BLOCK | ADRESS TAG | UC TAG | TAG VALID

522

SC — 201

IDC — 203

T C — 205

207

209

213

211

TO DATA LOOP

TO INSTRUCTION LOOP

TO PTE'S TRANSLATOR

EP 0 310 444 A2

FIG. 3

REPLACE REQUEST
IN T MODE
SC SELECT — 303
TRANSLATION
REQUEST

AND — 301

OR — 305 — USE TC

IN T MODE
TRANSLATION
REQUEST — 307

AND — 309 — USE SC

USE SC — 311
USE TC — 313

AND — 315 — USE IDC

FIG. 4

"1"

ENTER
T MODE

A B
MUX C
409

ENTER
T MODE

A B
MUX C
411

ENTER
T MODE

"0"

A B
MUX C
413

403

D Q
CK Q̄

405

D Q
CK Q̄

407

D Q
CK Q̄

D FLIP
FLOPS

415
ENTER
T MODE
EXIT
T MODE

OR

TM0

TM1

TM2

OR
401

IN T MODE

FIG. 5A

FIG. 5B

FIG. 5C

FIG. 5D

FIG. 5E

FIG. 6